# EUROPEAN PATENT APPLICATION

(11) **EP 4 368 903 A2**
(43) Date of publication of application: **15.05.2024**
(21) Application number: 23206299.2
(22) Date of filing: 27.10.2023
(51) Int. Cl.: F24F 3/14, F24F 11/00, F24F 11/65, F24F 12/00

(54) **FRESH AIR DEVICE, CONTROL METHOD FOR FRESH AIR DEVICE, AND STORAGE MEDIUM**

(30) Priority: 31.10.2022 CN 202211351609
(71) Applicant: Gunagdong Midea Heating & Ventilating Equipment Co., Ltd., Foshan Guangdong 528311 (CN); Midea Group Co., Ltd., Foshan, Guangdong 528311 (CN)
(72) Inventor: YU, Jiang, Foshan, 528311 (CN); WU, Xuannan, Foshan, 528311 (CN); WANG, Qingwei, Foshan, 528311 (CN); ZHANG, Feng, Foshan, 528311 (CN); ZHONG, Zhixiong, Foshan, 528311 (CN); DING, Yunxiao, Foshan, 528311 (CN)
(74) Representative: RGTH

(57) **Abstract**

The present disclosure discloses a fresh air device, a control method for the fresh air device, and a storage medium. The fresh air device includes an adsorption rotary wheel, a heat source, an air supply side fan, an air exhaust side fan, and a bypass air duct. The fresh air device is first configured to acquire current outdoor humidity, current indoor humidity, indoor limit humidity, and a current outdoor temperature; calculate a difference between the current indoor humidity and the indoor limit humidity, in response to determining, based on the current outdoor humidity, the indoor limit humidity, and the current outdoor temperature, that an operation mode of the fresh air device is an isoenthalpy humidity controlling mode; and control a rotational speed of the adsorption rotary wheel, an opening degree of a bypass air valve on the bypass air duct, and power of the heat source based on the difference, to enable the difference between the current indoor humidity and the indoor limit humidity to be within a predetermined humidity range. Therefore, in the present disclosure, the heat source, the rotational speed of the adsorption rotary wheel, and the opening degree of the bypass air valve can be controlled to realize multi-dimensional control of indoor ambient humidity, which can ensure that the fresh air device can operate in an energy-efficient manner all year round and improve user comfort.

## Description

### FIELD

The present disclosure relates to the field of air conditioning technologies, and more particularly, to a fresh air device, a control method for a fresh air device, and a storage medium.

### BACKGROUND

To control indoor humidify and improve an indoor air quality, humidity of fresh air is usually adjusted before being introduced into an indoor environment.

In the related art, humidity control is generally achieved by increasing a regeneration temperature (e.g., 100 °C) to recover moisture. However, in winter, heating all fresh air from outdoor below 10 °C to a high temperature required for regeneration will consume a huge amount of energy, resulting in a huge price to pay while obtaining comfort. Also, simply adjusting a rotational speed of a rotor cannot produce a desirable adjustment effect, which reduces comfort of an air conditioner and compromises user experience.

### SUMMARY

The present disclosure aims to solve at least one of the above technical problems in the related art to some extent. To this end, an embodiment of the present disclosure is to provide a control method for a fresh air device. In the control method, a heat source, a rotational speed of an adsorption rotary wheel, and an opening degree of a bypass air valve are controlled based on indoor and outdoor environmental conditions to realize multi-dimensional control of indoor ambient humidity, which can ensure that the fresh air device can operate in an energy-efficient manner all year round and improve user comfort.

Another embodiment of the present disclosure is to provide a computer-readable storage medium.

Another embodiment of the present disclosure is to provide a fresh air device.

Another embodiment of the present disclosure is to provide a fresh air device.

To achieve the above embodiments, embodiments of the present disclosure provide a control method for a fresh air device. The fresh air device comprises an adsorption rotary wheel, a heat source, an air supply side fan, an air exhaust side fan, and a bypass air duct. The air supply side fan is disposed at an indoor air supply opening and supplies outdoor fresh air to an indoor environment. The air exhaust side fan is disposed at an outdoor air exhaust opening and exhausts indoor return air to an outdoor environment. The adsorption rotary wheel recovers moisture from the indoor return air and release the moisture to the indoor environment along with the outdoor fresh air. The heat source is disposed at an outdoor fresh air opening and heats the outdoor fresh air. The bypass air duct is disposed between the outdoor fresh air opening and the indoor air supply opening and guides an outdoor fresh air unheated by the heat source to the indoor environment through the indoor air supply opening. The method comprises: acquiring current outdoor humidity, current indoor humidity, indoor limit humidity, and a current outdoor temperature; calculating a difference between the current indoor humidity and the indoor limit humidity in response to determining, based on the current outdoor humidity, the indoor limit humidity, and the current outdoor temperature, that an operation mode of the fresh air device is an isoenthalpy humidity controlling mode; and controlling a rotational speed of the adsorption rotary wheel, an opening degree of a bypass air valve on the bypass air duct, and power of the heat source based on the difference between the current indoor humidity and the indoor limit humidity, to enable the difference between the current indoor humidity and the indoor limit humidity to be within a predetermined humidity range.

In the control method for a fresh air device according to the embodiments of the present disclosure, the current outdoor humidity, the current indoor humidity, the indoor limit humidity, and the current outdoor temperature are obtained at first. Then, difference between the current indoor humidity and the indoor limit humidity is calculated in response to determining, based on the current outdoor humidity, the indoor limit humidity, and the current outdoor temperature, that the operation mode of the fresh air device is the isoenthalpy humidity controlling mode. Finally, the rotational speed of the adsorption rotary wheel, the opening degree of the bypass air valve on the bypass air duct, and the power of the heat source are controlled based on the difference between the current indoor humidity and the indoor limit humidity, to enable the difference between the current indoor humidity and the indoor limit humidity to be within the predetermined humidity range. Therefore, with the control method for a fresh air device according to the embodiments of the present disclosure, the heat source, the rotational speed of the adsorption rotary wheel, and the opening degree of the bypass air valve can be controlled based on the indoor and outdoor environmental conditions to realize the multi-dimensional control of the indoor ambient humidity, which can ensure that the fresh air device can operate in the energy-efficient manner all year round and improve the user comfort.

In some embodiments of the present disclosure, the acquiring the indoor limit humidity comprises: acquiring target indoor humidity and a target indoor temperature; and obtaining the indoor limit humidity by calculating based on the target indoor humidity and the target indoor temperature.

In some embodiments of the present disclosure, the determining, based on the current outdoor humidity, the indoor limit humidity, and the current outdoor temperature, that the operation mode of the fresh air device is the isoenthalpy humidity controlling mode comprises: determining that the operation mode of the fresh air device is the isoenthalpy humidity controlling mode when the current outdoor humidity is smaller than the indoor limit humidity and when the current outdoor temperature is greater than a humidification function lower limit temperature and smaller than the current indoor temperature; or determining that the operation mode of the fresh air device is the isoenthalpy humidity controlling mode when the current outdoor humidity is smaller than the indoor limit humidity and when the current outdoor temperature is greater than the humidification function lower limit temperature and smaller than an indoor limit temperature.

In some embodiments of the present disclosure, the method further comprises: controlling the rotational speed of the adsorption rotary wheel to be smaller than a predetermined rotational speed in response to determining that the operation mode of the fresh air device is the isoenthalpy humidity controlling mode.

In some embodiments of the present disclosure, the controlling the rotational speed of the adsorption rotary wheel, the opening degree of the bypass air valve on the bypass air duct, and the power of the heat source based on the difference between the current indoor humidity and the indoor limit humidity comprises: increasing the rotational speed of the adsorption rotary wheel, the opening degree of the bypass air valve, and the power of the heat source in response to the difference between the current indoor humidity and the indoor limit humidity is out of the predetermined humidity range; and decreasing the rotational speed of the adsorption rotary wheel, the opening degree of the bypass air valve, and the power of the heat source in response to the difference between the current indoor humidity and the indoor limit humidity is below the predetermined humidity range.

In some embodiments of the present disclosure, the method further comprises: repeatedly controlling the rotational speed of the adsorption rotary wheel, the opening degree of the bypass air valve, and the power of the heat source in response to the difference between the current indoor humidity and the indoor limit humidity is out of the predetermined humidity range in a predetermined duration.

In some embodiments of the present disclosure, a predetermined duration ranges from 1 min to 5 min.

In some embodiments of the present disclosure, the method further comprise: acquiring a carbon dioxide content of the indoor return air; and controlling the air supply side fan and/or the air exhaust side fan based on the carbon dioxide content of the indoor return air, to enable the carbon dioxide content of the indoor return air to be within a predetermined carbon dioxide range.

In some embodiments of the present disclosure, the controlling the air supply side fan and/or the air exhaust side fan based on the carbon dioxide content of the indoor return air comprises: increasing a rotational speed of the air supply side fan and/or a rotational speed of the air exhaust side fan when the carbon dioxide content of the indoor return air is out of the predetermined carbon dioxide range; and decreasing the rotational speed of the air supply side fan and/or the rotational speed of the air exhaust side fan when the carbon dioxide content of the indoor return air is below the predetermined carbon dioxide range.

To achieve above embodiments, embodiments of the present disclosure provide a computer-readable storage medium. The computer-readable storage medium has a program for controlling a fresh air device. The program for controlling the fresh air device, when executed by a processor, implements the control method for a fresh air device according to above embodiments.

When the computer-readable storage medium of the embodiments executes, by means of the processor, the program for controlling the fresh air device stored on the computer-readable storage medium, the heat source, the rotational speed of the adsorption rotary wheel, and the opening degree of the bypass air valve can be controlled based on the indoor and outdoor environmental conditions to realize the multi-dimensional control of the indoor ambient humidity, which can ensure that the fresh air device can operate in the energy-efficient manner all year round and improve the user comfort.

To achieve above embodiments, embodiments of the present disclosure provide a fresh air device. The fresh air device comprises a memory, a processor, and a program for controlling a fresh air device stored in the memory and executable by the processor. The processor, when executing the program for controlling the fresh air device, implements the control method for a fresh air device according to above embodiments.

The fresh air device of the embodiments of the present disclosure comprises the memory, the processor, and the program for controlling the fresh air device stored in the memory and executable by the processor. When the processor executes the program for controlling the fresh air device, the heat source, the rotational speed of the adsorption rotary wheel, and the opening degree of the bypass air valve can be controlled based on the indoor and outdoor environmental conditions to realize the multi-dimensional control of the indoor ambient humidity, which can ensure that the fresh air device can operate in the energy-efficient manner all year round and improve the user comfort.

To achieve the above embodiments, embodiments of the present disclosure provide a fresh air device. The fresh air device comprises an adsorption rotary wheel, a heat source, an air supply side fan, an air exhaust side fan, a bypass air duct, and a control assembly. The air supply side fan is disposed at an indoor air supply opening and supplies outdoor fresh air to an indoor environment. The air exhaust side fan is disposed at an outdoor air exhaust opening and exhausts indoor return air to an outdoor environment. The adsorption rotary wheel recovers moisture from the indoor return air and release the moisture to the indoor environment along with the outdoor fresh air. The heat source is disposed at an outdoor fresh air opening and heats the outdoor fresh air. The bypass air duct is disposed between the outdoor fresh air opening and the indoor air supply opening and guides the outdoor fresh air unheated by the heat source to the indoor environment through the indoor air supply opening. The control assembly: acquires current outdoor humidity, current indoor humidity, indoor limit humidity, and a current outdoor temperature; calculates a difference between the current indoor humidity and the indoor limit humidity, in response to determining, based on the current outdoor humidity, the indoor limit humidity, and the current outdoor temperature, that an operation mode of the fresh air device is an isoenthalpy humidity controlling mode; and controls a rotational speed of the adsorption rotary wheel, an opening degree of a bypass air valve on the bypass air duct, and power of the heat source based on the difference between the current indoor humidity and the indoor limit humidity, to enable the difference between the current indoor humidity and the indoor limit humidity to be within a predetermined humidity range.

The fresh air device according to the embodiments of the present disclosure comprises the adsorption rotary wheel, the heat source, the air supply side fan, the air exhaust side fan, the bypass air duct, and the control assembly. The air supply side fan is disposed at the indoor air supply opening and configured to supply the outdoor fresh air to the indoor environment. The air exhaust side fan is disposed at the outdoor air exhaust opening and configured to exhaust the indoor return air to the outdoor environment. The adsorption rotary wheel is configured to recover the moisture from the indoor return air and release the moisture to the indoor environment along with the outdoor fresh air. The heat source is disposed at the outdoor fresh air opening and configured to heat the outdoor fresh air. The bypass air duct is disposed between the outdoor fresh air opening and the indoor air supply opening and configured to guide the outdoor fresh air unheated by the heat source to the indoor environment through the indoor air supply opening. The control assembly is configured to: acquire the current outdoor humidity, the current indoor humidity, the indoor limit humidity, and the current outdoor temperature; calculate the difference between the current indoor humidity and the indoor limit humidity, in response to determining, based on the current outdoor humidity, the indoor limit humidity, and the current outdoor temperature, that the operation mode of the fresh air device is the isoenthalpy humidity controlling mode; and control the rotational speed of the adsorption rotary wheel, the opening degree of a bypass air valve on the bypass air duct, and the power of the heat source based on the difference between the current indoor humidity and the indoor limit humidity, to enable the difference between the current indoor humidity and the indoor limit humidity to be within the predetermined humidity range. Therefore, in the fresh air device according to the embodiments of the present disclosure, the heat source, the rotational speed of the adsorption rotary wheel, and the opening degree of the bypass air valve can be controlled based on the indoor and outdoor environmental conditions to realize the multi-dimensional control of the indoor ambient humidity, which can ensure that the fresh air device can operate in the energy-efficient manner all year round and improve the user comfort.

### BRIEF DESCRIPTION OF THE DRAWINGS

FIG. 1 is a schematic diagram showing a structure of a fresh air device in the related art.
FIG. 2 is a schematic diagram showing a structure of a fresh air device according to an embodiment of the present disclosure.
FIG. 3 is a flowchart illustrating a control method for a fresh air device according to an embodiment of the present disclosure.
FIG. 4 is a schematic diagram showing a control system of a fresh air device according to an embodiment of the present disclosure.
FIG. 5 is a schematic control diagram of a humidification mode of a fresh air device according to a specific embodiment of the present disclosure.
FIG. 6 is a flowchart illustrating a control method for a fresh air device according to a specific embodiment of the present disclosure.
FIG. 7 is a flowchart illustrating a control method for a fresh air device according to another specific embodiment of the present disclosure.
FIG. 8 is a schematic diagram showing an indoor air supply temperature of each of a fresh air device according to an embodiment of the present disclosure and a fresh air device in the related art.
FIG. 9 is a structural block diagram showing a first type of fresh air device according to an embodiment of the present disclosure.
FIG. 10 is a structural block diagram showing a second type of fresh air device according to an embodiment of the present disclosure.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

A fresh air device, a control method for a fresh air device, and a storage medium according to the embodiments of the present disclosure are described below with reference to the accompanying drawings and specific embodiments.

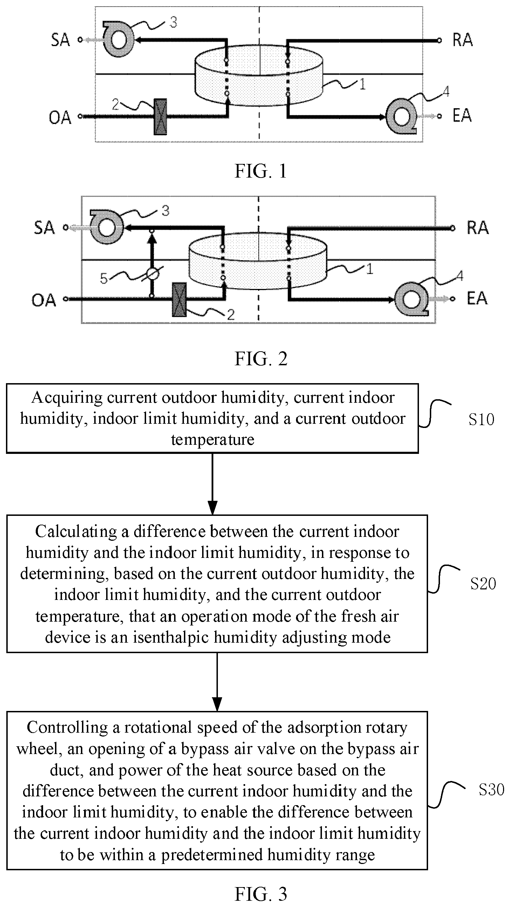

As illustrated in FIG. 1, in the related art, a fresh air device may comprise an adsorption rotary wheel 1, a heat source 2, an air supply side fan 3, and an air exhaust side fan 4. By building an adsorption rotary wheel and a heat source in the fresh air device and providing the fresh air device with an adjustable-speed motor, the device can adjust an operation mode of the rotor based on changes in indoor and outdoor air conditions, and thus the device can switch among various modes of humidification, heat recovery, and natural ventilation. For example, in an operating condition of humidification, all fresh air is heated to a high temperature by the heat source, and sensible heat is converted into latent heat by the rotor, so that the humidity increases and the temperature decreases. However, under certain conditions, a temperature of the fresh air subject to a temperature drop may be as high as 50 °C or more, and thus directly sending the fresh air into an indoor environment near a human body will cause discomfort. In addition, in the face of different indoor and outdoor operating conditions, the conventional fresh air device has different requirements for latent-heat recovery efficiency. Relevant control methods are limited to adjusting a regenerative heat source temperature, while a rotational speed of the rotor has little adjustment effect. A condition of a single control parameter may lead to an over-capacity output or an under-capacity output, resulting in a waste of energy. However, the fresh air device of the present disclosure controls the heat source, the rotational speed of the adsorption rotary wheel, and an opening degree of a bypass air valve based on indoor and outdoor environmental conditions, which realizes multi-dimensional control of indoor ambient humidity, ensuring that the fresh air device can operate in an energy-efficient manner all year round and improve user comfort.

It should be noted that, as illustrated in FIG. 2, the fresh air device according to the embodiments of the present disclosure comprises the adsorption rotary wheel 1, the heat source 2, the air supply side fan 3, the air exhaust side fan 4, and a bypass air valve 5. The air supply side fan 3 is disposed at an indoor air supply opening and configured to supply outdoor fresh air to an indoor environment. The air exhaust side fan 4 is disposed at an outdoor air exhaust opening and configured to exhaust indoor return air to an outdoor environment. The adsorption rotary wheel 1 is configured to recover moisture from the indoor return air and release the moisture to the indoor environment along with the outdoor fresh air. The heat source 2 is disposed at an outdoor fresh air opening and configured to heat the outdoor fresh air. The heat source 2 may be a heating-resistance heating tube, a ceramic electric auxiliary heater, a whole set of warm air devices, etc. Use of the heat source is not exemplarily limited in the present disclosure. A user can make specific choices based on use environments of the fresh air device. The bypass air valve 5 is disposed between the outdoor fresh air opening and the indoor air supply opening and configured to guide the outdoor fresh air unheated by the heat source 2 to the indoor environment through the indoor air supply opening. In FIG. 2, OA (Outside Air) represents the outdoor fresh air, RA (Return Air) represents the indoor return air, SA (Supply Air) represents indoor supply air, and EA (Exhaust Air) represents outdoor exhaust air. The heat source 2, the adsorption rotary wheel 1, and the air supply fan 3 together form an air supply channel that supplies air to the indoor environment. The outdoor fresh air, under an action of the air supply fan 3, passes through the heat source 2 and the adsorption rotary wheel 1 sequentially and then enters the indoor environment. The adsorption rotary wheel 1 and the air exhaust fan 4 together form an air exhaust channel that exhausts air to the outdoor environment. The indoor return air, under an action of the air exhaust side fan 4, is exhausted to the outdoor environment by the adsorption rotary wheel 1.

It should be noted that both the "supply-side" and the "exhaust-side" mentioned in the present disclosure are described with respect to the indoor environment. "Supply" in "supply-side" refers to supplying the outdoor air to the indoor environment, and "exhaust" in "exhaust-side" refers to exhausting the indoor air to the outdoor environment. Therefore, a function of the air supply side fan as illustrated in FIG. 2 is to supply the outdoor fresh air to the indoor environment, and a function of the air exhaust side fan as illustrated in FIG. 2 is to exhaust the indoor air to the outdoor environment.

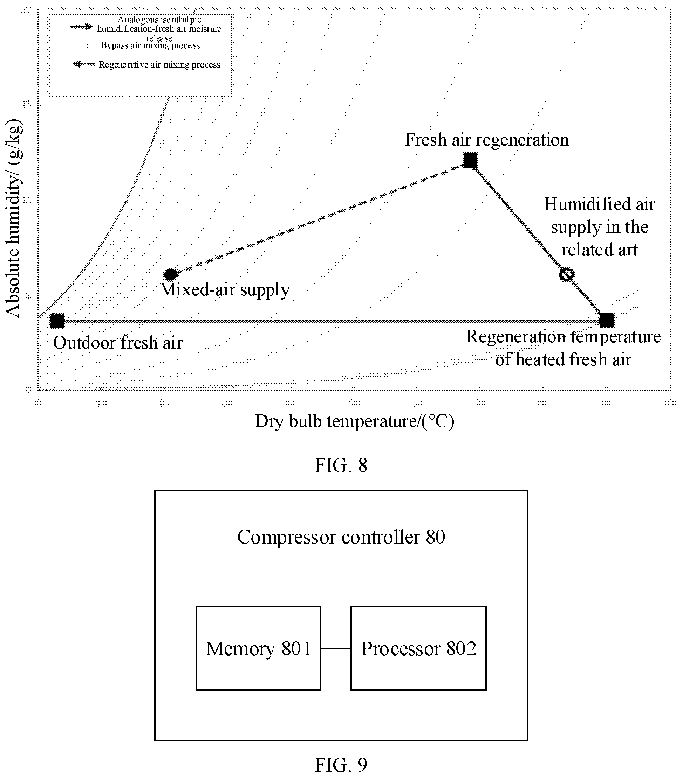

As illustrated in FIG. 8, in a case where no bypass air valve is provided in the related art, under an operating condition of humidified air supply of the fresh air device, the humidified air supply has a high temperature that can even reach more than 80 °C, as illustrated in a hollow circle marked in the figure. However, in the present disclosure, with the bypass air valve, a part of the fresh air may be guided directly to the indoor air supply opening without passing through the heat source, and may be mixed with the outdoor fresh air heated by the heat source, i.e., regenerated fresh air in the figure. Then, a mixed air supply is carried out. Obviously, a temperature of the mixed air supply in the figure is lower than a temperature of the humidified air supply in the related art while ensuring humidity, which is more in line with requirements of the user for the temperature and humidity of the indoor environment.

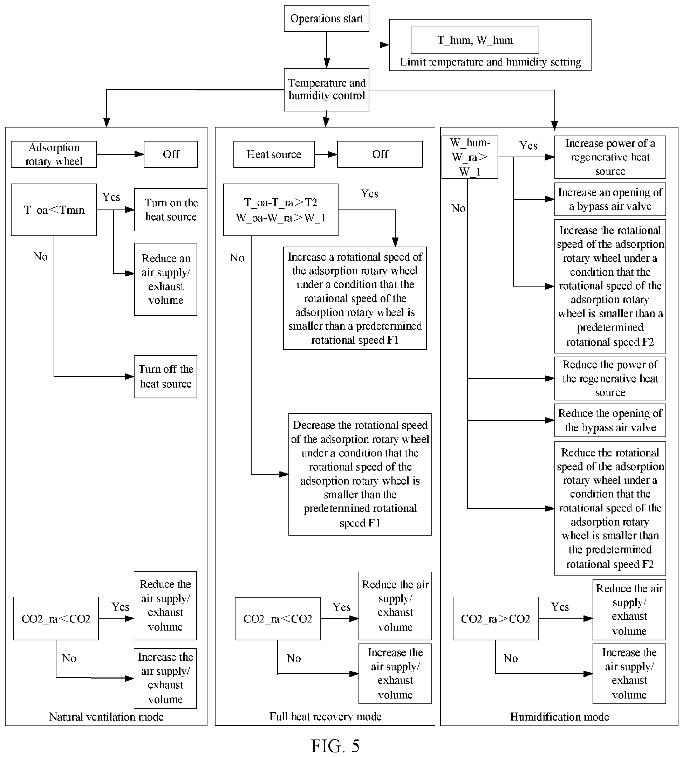

It should be noted that the embodiments of the present disclosure achieve switching between different operation modes by controlling the heat source 2, the rotational speed of the adsorption rotary wheel 1, and the opening degree of the bypass air valve 5. For example, when the operation mode is a humidification mode, the bypass air valve 5 is controlled to open, and a rotational speed range of a rotor-driven motor is adjusted to a rotational speed corresponding to an isoenthalpy humidity controlling mode. The indoor supply air RA passes through a moisture-absorbing region, is extracted by the air exhaust side fan 4 after passing through the adsorption rotary wheel 1, and is exhausted to the outdoor environment. In this process, moisture in the indoor supply air RA is adsorbed by the adsorption rotary wheel 1. When the bypass air valve 5 is opened, a part of the outdoor fresh air OA passes through a dehumidification region of the adsorption rotary wheel 1 subsequent to heating of the heat source 2, is extracted by the air supply side fan 3 after passing through the adsorption rotary wheel 1, is mixed with unheated fresh air, and then is sent to the indoor environment. In this process, the part of the fresh air heated by the heat source 2 sends the moisture stored in the adsorption rotary wheel 1 to the indoor environment to realize humidification. As illustrated in FIG. 5, when the operation mode is a full heat recovery mode, the bypass air valve 5 is controlled to be closed. A rotational speed range of the adsorption rotary wheel 1 is adjusted to a rotational speed corresponding to the full heat recovery mode, and the heat source is controlled to be closed. Exemplarily, when a difference between a temperature of the outdoor fresh air and a temperature of the indoor return air is greater than a predetermined temperature T2 and a difference between humidity of the outdoor fresh air and humidity of the indoor return air is greater than predetermined humidity W1, the rotational speed of the adsorption rotary wheel is controlled to be increased under a condition that the rotational speed of the adsorption rotary wheel is smaller than a predetermined rotational speed F1. When the difference between the temperature of the outdoor fresh air and the temperature of the indoor return air is equal to or smaller than the predetermined temperature T2 or the difference between the humidity of the outdoor fresh air and the humidity of the indoor return air is equal to or smaller than the predetermined humidity W1, the rotational speed of the adsorption rotary wheel is controlled to be reduced under a condition that the rotational speed of the adsorption rotary wheel is smaller than the predetermined rotational speed F1. In the full heat recovery mode, an air supply/exhaust volume is reduced when a carbon dioxide content of the indoor return air is smaller than a predetermined carbon dioxide content, and the air supply/exhaust volume is increased when the carbon dioxide content of the indoor return air is equal to or greater than the predetermined carbon dioxide content. It should be understood that in the full heat recovery mode, the indoor supply air RA and the outdoor fresh air OA are respectively subject to a sensible heat exchange and a latent heat exchange through the adsorption rotary wheel 1, and then are exhausted to the outdoor environment and the indoor environment, respectively, under an extraction of the air exhaust fan 4 and an extraction of the air supply fan 3. When the operation mode is a natural ventilation mode, the bypass air valve in this mode may be in an open state or a closed state, and the adsorption rotary wheel 1 stops rotating. Exemplarily, when the temperature of the outdoor fresh air is smaller than a minimum predetermined temperature Tmin, the heat source is turned on and the air supply/exhaust volume is reduced. When the temperature of the outdoor fresh air is equal to or greater than the minimum predetermined temperature Tmin, the heat source is turned off. In the natural ventilation mode, when the carbon dioxide content of the indoor return air is smaller than the predetermined carbon dioxide content, the air supply/exhaust volume is reduced. When the carbon dioxide content of the indoor return air is equal to or greater than the predetermined carbon dioxide content, the air supply/exhaust volume is increased. It should be understood that, in the natural ventilation mode, the indoor supply air RA and the outdoor fresh air OA pass directly, and are exhausted to the outdoor environment and the indoor environment, respectively, under the extraction of the exhaust air fan 4 and the extraction of the air supply fan 3.

FIG. 3 is a flowchart illustrating the control method for a fresh air device according to an embodiment of the present disclosure.

As illustrated in FIG. 3, the control method for a fresh air device according to the embodiments comprises operations at blocks.

At block S10, current outdoor humidity, current indoor humidity, indoor limit humidity, and a current outdoor temperature are acquired.

The control method for a fresh air device in the embodiments of the present disclosure can be applied to a control system for the fresh air device. The control system for the fresh air device, based on the indoor and outdoor environmental conditions, can realize the switching between different operation modes and an adjustment to the indoor environment through switching control of the heat source 2, the rotational speed of the adsorption rotary wheel 1, and the opening degree of the bypass air valve 5.

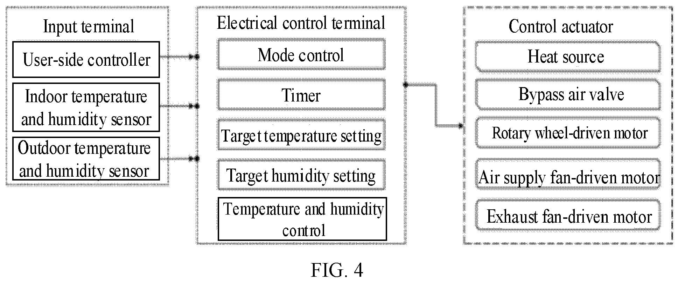

Exemplarily, the control system for the fresh air device of the present disclosure is illustrated in FIG. 4. The whole control system for the fresh air device mainly comprises four parts, i.e., an input terminal, an electrical control terminal, a switch actuator, and a control actuator. A signal from the input terminal delivers an instruction and information to the electrical control terminal through a transmitter. A built-in calculation program is configured to process the instruction and the information and output an operation mode. The control actuator is configured to regulate an operation of a control device to achieve target temperature and humidity. The input terminal comprises a user-side controller, an indoor temperature and humidity sensor, an outdoor temperature and humidity sensor, and other air sensors. The user-side controller is configured to transmit instructions such as an operation mode or timing to the device, while the indoor and outdoor temperature and humidity sensors are configured to transmit information about current indoor and outdoor air conditions to the electrical control terminal. The electrical control terminal comprises a mode control processor, a timer, a target temperature and humidity setter, a temperature and humidity control and calculation module, and the like. The electrical control terminal is configured to determine, through a calculation and a processing subsequent to reception of the information, the operation mode, the target temperature and humidity, and on-off and an opening degree setting of individual members to achieve the target temperature and humidity. Finally, corresponding actions are performed by the control actuator. During a normal operation of the device, the target temperature and humidity of the indoor environment is controlled based on signals continuously input from the input terminal, the calculation and the processing of the electrical control terminal, and the actions of the control actuator.

It should be noted that, as illustrated in FIG. 4, the input terminal comprises the user-side controller, the indoor temperature and humidity sensor, the outdoor temperature and humidity sensor, and other air sensors, and is configured to acquire the current outdoor humidity, the current indoor humidity, the indoor limit humidity, and the current outdoor temperature. In addition, a sensor configured to acquire other parameters required to adjust the operation mode may comprise, but is not limited to, a CO2 sensor, a PM2.5 sensor, a formaldehyde sensor, a Total Volatile Organic Compounds (TVOC) sensor, or other air quality sensors. The present disclosure is not limited in this regard.

In some embodiments of the present disclosure, acquiring the indoor limit humidity comprises: acquiring target indoor humidity and a target indoor temperature, and obtaining the indoor limit humidity by calculating based on the target indoor humidity and the target indoor temperature.

Exemplarily, as an example, FIG. 5 is a schematic diagram illustrating a control mode of the fresh air device according to a specific embodiment of the present disclosure. As illustrated in FIG. 5, a startup and operation mode signal is input by the user. The operation mode may be an automatic mode, or a mode directly specified by the user. When the operation mode is the automatic mode, a corresponding operation mode is determined by the device through signals acquired by the temperature and humidity sensors on a fresh air side and a return air side. An instruction is transmitted by the device to a corresponding switch actuator to realize control corresponding to the corresponding operation mode. Meanwhile, the indoor limit humidity is calculated by the electrical control terminal based on the set target indoor humidity and the set target indoor temperature. An indoor limit humidity instruction in this case is transmitted to a temperature and humidity control module. Then, a corresponding executive signal instruction is calculated by the temperature and humidity control module of the electrical control terminal based on a target temperature and humidity instruction and a signal from the temperature and humidity sensor on the return air side. Finally, a corresponding action is performed by the control actuator based on an executive signal to control the temperature and humidity. Obtaining the indoor limit humidity by calculating based on the target indoor humidity and the target indoor temperature may be realized by checking a table, or the indoor limit humidity may be calculated through a calculation formula obtained from a simulation. The present disclosure is not limited in this regard.

It should be noted that the control actuator comprises the heat source 2, the rotor-driven motor, an air supply fan-driven motor, an air exhaust fan-driven motor, and the bypass air valve 5. The heat source 2 is configured to raise an air temperature, to regenerate rotations in the humidification mode, and to prevent cold air from being directly blown inside in the natural ventilation mode. The bypass air valve 5 is configured to change an air volume passing through the heat source, to reduce system energy consumption under a premise of guaranteeing a same amount of humidification in the humidification mode, and to be turned on in the natural ventilation mode to decrease an air resistance and reduce fan energy consumption. Through coupling control of a plurality of control actuators, the temperature and humidity of an air supply are adjusted.

At block S20, a difference between the current indoor humidity and the indoor limit humidity is calculated in response to determining, based on the current outdoor humidity, the indoor limit humidity, and the current outdoor temperature, that an operation mode of the fresh air device is an isoenthalpy humidity controlling mode.

Exemplarily, to improve the comfort of the user, the fresh air device will perform different operation modes based on different environments. The operation modes comprise the humidification mode, the heat recovery mode, and the natural ventilation mode. The humidification mode is equivalent to the isoenthalpy humidity controlling mode in this embodiment. In particular, when the current outdoor temperature and humidity are quite comfortable, the outdoor fresh air can be introduced directly into the indoor environment, and thus the fresh air device can be in the natural ventilation mode. When indoor heat energy or indoor cold energy needs to be recovered, the heat recovery mode can be implemented. Exemplarily, the heat source may be controlled not to work, and the full heat recovery mode is implemented to recover the indoor heat energy or the indoor cold energy, reducing energy consumption of indoor temperature control. This embodiment mainly limits the isoenthalpy humidity controlling mode. In some embodiments of the present disclosure, determining, based on the current outdoor humidity, the indoor limit humidity, and the current outdoor temperature, that the operation mode of the fresh air device is the isoenthalpy humidity controlling mode comprises: determining that the operation mode of the fresh air device is the isoenthalpy humidity controlling mode, when the current outdoor humidity is smaller than the indoor limit humidity and the current outdoor temperature is greater than a humidification function lower limit temperature and smaller than the current indoor temperature; or determining that the operation mode of the fresh air device is the isoenthalpy humidity controlling mode, when the current outdoor humidity is smaller than the indoor limit humidity and the current outdoor temperature is greater than the humidification function lower limit temperature and smaller than an indoor limit temperature.

Exemplarily, when air is at a low temperature, the air also has a low humidity content. When a humidity content of outdoor air is too low, it is likely that humidification of the indoor environment cannot be accomplished using the outdoor air. Therefore, in this embodiment, the outdoor temperature is further compared with the humidification function lower limit temperature. The humidification function lower limit temperature indicates a lowest temperature at which the outdoor air can be utilized for humidification. Exemplarily, the target indoor humidity and the target indoor temperature may be acquired at first. What is generally displayed when the user controls the indoor humidity is relative air humidity, whereas absolute air humidity is controlled during controlling the air humidity in this embodiment to improve a control accuracy rate. For this reason, in this embodiment, the indoor limit humidity W_hum may be obtained by calculating based on the target indoor humidity and target indoor temperature subsequent to acquisition of the target indoor humidity and the target indoor temperature. It should be understood that the indoor limit humidity W_hum represents the absolute air humidity. The current outdoor humidity W_oa and the current outdoor temperature T_oa are acquired based on the temperature and humidity sensor. The operation mode of the fresh air device is determined as the isoenthalpy humidity controlling mode based on the current outdoor humidity W_oa, the indoor limit humidity W_hum, and the current outdoor temperature T_oa. For example, the operation mode of the fresh air device is determined as the isoenthalpy humidity controlling mode, when the current outdoor humidity W_oa is smaller than the indoor limit humidity W_hum and the current outdoor temperature T_oa is greater than the humidification function lower limit temperature and smaller than the current indoor temperature; or the operation mode of the fresh air device is determined as the isoenthalpy humidity controlling mode, when the current outdoor humidity is smaller than the indoor limit humidity W_hum and the current outdoor temperature T_oa is greater than the humidification function lower limit temperature and smaller than the indoor limit temperature.

At block S30, a rotational speed of the adsorption rotary wheel, an opening degree of a bypass air valve on the bypass air duct, and power of the heat source are controlled based on the difference between the current indoor humidity and the indoor limit humidity, to enable the difference between the current indoor humidity and the indoor limit humidity to be within a predetermined humidity range.

Exemplarily, subsequent to a determination of the difference between the current indoor humidity and the indoor limit humidity, a specific control instruction may be determined. In addition, the bypass air valve is provided in this embodiment. That is, an adjustment of the indoor humidity may be completed by controlling the opening degree of the bypass air valve and in combination with control of the power of the heat source and control of the rotational speed of the adsorption rotary wheel, to control the current indoor humidity to be close to the indoor limit humidity. In particular, a determination is made by determining the difference between the current indoor humidity and the indoor limit humidity. When the difference is within the predetermined humidity range, the control may be stopped. When the difference is out of the predetermined humidity range, a corresponding adjustment may be performed. For example, the opening degree of the bypass air valve is taken as an example for description. When the difference between the current indoor humidity and the indoor limit humidity is out of the predetermined humidity range, it means that the current indoor humidity is relatively high, and thus the opening degree of the bypass air valve can be increased to reduce an air volume passing through the adsorption rotary wheel, appropriately lowering the current indoor humidity. When the difference between the current indoor humidity and the indoor limit humidity is below the predetermined humidity range, it means that the current indoor humidity is relatively low, and thus the opening degree of the bypass air valve can be decreased to increase the air volume passing through the adsorption rotary wheel, appropriately increasing the current indoor humidity.

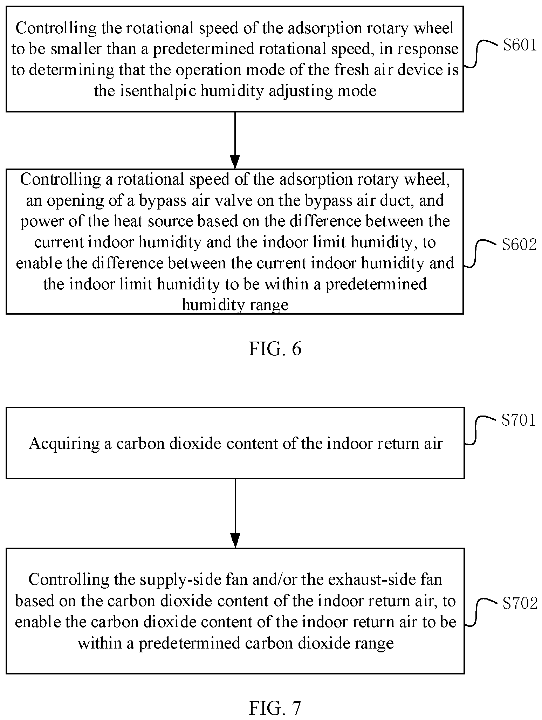

In some embodiments of the present disclosure, as illustrated in FIG.6, the control method for a fresh air device comprises operations at blocks.

At block S601, the rotational speed of the adsorption rotary wheel is controlled to be smaller than a predetermined rotational speed in response to determining that the operation mode of the fresh air device is the isoenthalpy humidity controlling mode.

At block S602, a rotational speed of the adsorption rotary wheel, an opening degree of a bypass air valve on the bypass air duct, and power of the heat source are controlled based on the difference between the current indoor humidity and the indoor limit humidity, to enable the difference between the current indoor humidity and the indoor limit humidity to be within a predetermined humidity range.

Exemplarily, in response to determining that the operation mode of the fresh air device is the isoenthalpy humidity controlling mode, the control method for a fresh air device in the embodiment may be to control the rotational speed of the adsorption rotary wheel to be smaller than the predetermined rotational speed. Subsequent to a reduction of the rotational speed of the adsorption rotary wheel, the outdoor fresh air will be in full contact with a moisture-absorbing material in the adsorption rotary wheel when passing through the adsorption rotary wheel. Thus, the moisture in the adsorption rotary wheel is brought to the indoor environment by the outdoor fresh air, increasing the humidity of the indoor environment. In one embodiment, the predetermined rotational speed in this embodiment may be in a value ranging from 500 revolutions per hour to 2,500 revolutions per hour.

In some embodiments of the present disclosure, controlling the rotational speed of the adsorption rotary wheel, the opening degree of the bypass air valve on the bypass air duct, and the power of the heat source based on the difference between the current indoor humidity and the indoor limit humidity comprises: increasing the rotational speed of the adsorption rotary wheel, the opening degree of the bypass air valve, and the power of the heat source, when the difference between the current indoor humidity and the indoor limit humidity is out of the predetermined humidity range; and decreasing the rotational speed of the adsorption rotary wheel, the opening degree of the bypass air valve, and the power of the heat source, when the difference between the current indoor humidity and the indoor limit humidity is below the predetermined humidity range.

Exemplarily, since the bypass air valve is provided in this embodiment, the bypass air valve is involved in the adjustment of the indoor humidity, while heating power of the heat source and the rotational speed of the adsorption rotary wheel are retained, which can improve controllability of the indoor humidity. How to control the rotational speed of the adsorption rotary wheel, the opening degree of the bypass air valve, and the power of the heat source may be determined based on the difference between the current indoor humidity and the indoor limit humidity. Exemplarily, when the difference between the current indoor humidity and the indoor limit humidity is out of the predetermined humidity range, it means that the current indoor humidity may cause discomfort to the user, and thus the current indoor humidity needs to be adjusted. In particular, the current indoor humidity can be adjusted through increasing the rotational speed of the adsorption rotary wheel, the opening degree of the bypass air valve, and the power of the heat source, to adjust the indoor humidity. When the difference is below the predetermined humidity range, the rotational speed of the adsorption rotary wheel, the opening degree of the bypass air valve, and the power of the heat source are reduced to control the difference between the current indoor humidity and the indoor limit humidity to be within the predetermined humidity range, which means that the adjustment of the indoor humidity is completed. Exemplarily, as illustrated in FIG. 5, W_1 represents the predetermined humidity range, W_hum represents the indoor limit humidity, and W_ra represents the current indoor humidity. It should be understood that the rotational speed of the adsorption rotary wheel, the opening degree of the bypass air valve, and the power of the heat source are coupled and adjusted simultaneously, which can greatly improve controllability of the fresh air device and adjustment precision of the indoor humidity to provide a comfortable indoor air environment to the user.

In this embodiment, it should be noted that whether the rotational speed of the adsorption rotary wheel is increased or decreased during adjusting the rotational speed of the adsorption rotary wheel, the rotational speed of the adsorption rotary wheel is limited to be smaller than the predetermined rotational speed F2. That is, the description "the rotational speed of the adsorption rotary wheel is increased" as described above means that the rotational speed of the adsorption rotary wheel is increased under a condition of limiting the rotational speed of the adsorption rotary wheel to be smaller than the predetermined rotational speed F2. When the rotational speed of the adsorption rotary wheel subsequent to an increase of the rotational speed is greater than the predetermined rotational speed F2, the rotational speed of the adsorption rotary wheel may be limited to be smaller than the predetermined rotational speed F2.

In some embodiments of the present disclosure, the control method for a fresh air device further comprises: repeatedly controlling the rotational speed of the adsorption rotary wheel, the opening degree of the bypass air valve, and the power of the heat source in a predetermined duration, when the difference between the current indoor humidity and the indoor limit humidity is out of the predetermined humidity range.

Exemplarily, in some embodiments of the present disclosure, a predetermined duration ranges from 1 min to 5 min. For example, in order to adjust the difference between the current indoor humidity and the indoor limit humidity to be within the predetermined range, the rotational speed of the adsorption rotary wheel, the opening degree of the bypass air valve on the bypass air duct, and the power of the heat source can be controlled for a continuous duration of one minute based on the difference between the current indoor humidity and the indoor limit humidity. Then the current outdoor humidity, the current indoor humidity, the indoor limit humidity, and the current outdoor temperature are reacquired and determined, until the difference between the current indoor humidity and the indoor limit humidity is within the predetermined humidity range.

In some embodiments of the present disclosure, as illustrated in FIG.7, the control method for a fresh air device further comprises operations at blocks.

At block S701, a carbon dioxide content of the indoor return air is acquired.

At block S702, the air supply side fan and/or the air exhaust side fan is controlled based on the carbon dioxide content of the indoor return air, to enable the carbon dioxide content of the indoor return air to be within a predetermined carbon dioxide range.

Exemplarily, as illustrated in FIG. 5, the carbon dioxide content CO2_ra of the indoor return air is acquired based on a carbon dioxide sensor. When the carbon dioxide content CO2_ra in the indoor environment is smaller than a predetermined carbon dioxide value CO2, the air supply volume and/or the exhaust air volume may be reduced. When the carbon dioxide content CO2_ra in the indoor environment is greater than the predetermined carbon dioxide value CO2, the air volume may be increased, to enable the carbon dioxide content of the indoor return air to be within the predetermined carbon dioxide range, ensuring a quality of the indoor air.

In some embodiments of the present disclosure, controlling the air supply side fan and the air exhaust side fan based on the carbon dioxide content of the indoor return air comprises: increasing a rotational speed of the air supply side fan and/or a rotational speed of the air exhaust side fan, when the carbon dioxide content of the indoor return air is out of the predetermined carbon dioxide range; and decreasing the rotational speed of the air supply side fan and/or the rotational speed of the air exhaust side fan, when the carbon dioxide content of the indoor return air is below the predetermined carbon dioxide range.

Exemplarily, in a process of adjusting the rotational speed of the air supply side fan and/or the rotational speed of the air exhaust side fan based on the carbon dioxide content of the indoor return air, whether the carbon dioxide content measured by the carbon dioxide sensor is within the predetermined carbon dioxide range may be determined. When the carbon dioxide content of the indoor return air is not within is out of the predetermined carbon dioxide range, the rotational speed of the air supply side fan and/or the rotational speed of the air exhaust side fan may be adjusted. When the carbon dioxide content of the indoor return air is within the predetermined carbon dioxide range, the rotational speed of the air supply side fan and/or the rotational speed of the air exhaust side fan may be unadjusted. Of course, the user may also independently set an air supply volume of the air supply side fan and/or an air supply volume of the air exhaust side fan. The present disclosure is not limited in this regard, as long as it can be ensured that the air supply volume of the air supply side fan and/or the air supply volume of the air exhaust side fan is increased when the carbon dioxide content is high, and that the air supply volume of the air supply side fan and/or the air supply volume of the air exhaust side fan can be appropriately reduced when the carbon dioxide content is low.

In conclusion, with the control method for a fresh air device according to the embodiments of the present disclosure, the heat source, the rotational speed of the adsorption rotary wheel, and the opening degree of the bypass air valve can be controlled based on the indoor and outdoor environmental conditions to realize the multi-dimensional control of the indoor ambient humidity, which can ensure that the fresh air device can operate in the energy-efficient manner all year round and improve the user comfort.

To implement the method according to the above embodiments, embodiments of the present disclosure provide a computer-readable storage medium. The computer-readable storage medium stores a program for controlling the fresh air device. The program for controlling the fresh air device, when executed by a processor, implements the steps of the control method for a fresh air device according to above embodiments.

When the computer-readable storage medium of the embodiments of the present disclosure executes, by means of the processor, the program for controlling the fresh air device stored on the computer-readable storage medium, the heat source, the rotational speed of the adsorption rotary wheel, and the opening degree of the bypass air valve can be controlled to realize the multi-dimensional control of the indoor ambient humidity, which can ensure that the fresh air device can operate in the energy-efficient manner all year round and improve the user comfort.

FIG. 9 is a structural block diagram showing a first type of fresh air device according to an embodiment of the present disclosure.

Further, as illustrated in FIG. 9, the present disclosure further provide a fresh air device 80. The fresh air device 80 comprises a memory 801, a processor 802, and a program for controlling a fresh air device stored in the memory 801 and executable by the processor 802. The processor 802, when executing the program, implements the control method for a fresh air device according to above embodiments.

When the fresh air device of the embodiments of the present disclosure executes, by means of the processor, the program for controlling the fresh air device stored on the memory, the heat source, the rotational speed of the adsorption rotary wheel, and the opening degree of the bypass air valve can be controlled to realize the multi-dimensional control of the indoor ambient humidity, which can ensure that the fresh air device can operate in the energy-efficient manner all year round and improve the user comfort.

FIG. 10 is a structural block diagram showing a second type of fresh air device according to an embodiment of the present disclosure.

Further, as illustrated in FIG. 10, the present disclosure provide a fresh air device 90 comprising the adsorption rotary wheel 1, the heat source 2, the air supply side fan 3, the air exhaust side fan 4, the bypass air duct, and a control assembly 901.

The fresh air device 90 of the embodiments of the present disclosure comprises the rotor 1, the heat source 2, the air supply side fan 3, the air exhaust side fan 4, the bypass air duct, and the control assembly 901. The air supply side fan 3 is disposed at an indoor air supply opening and configured to supply outdoor fresh air to an indoor environment. The air exhaust side fan 4 is disposed at an outdoor air exhaust opening and configured to exhaust indoor return air to an outdoor environment. The adsorption rotary wheel 1 is configured to recover moisture from the indoor return air and release the moisture to the indoor environment along with the outdoor fresh air. The heat source 2 is disposed at an outdoor fresh air opening and configured to heat the outdoor fresh air. The bypass air duct is disposed between the outdoor fresh air opening and the indoor air supply opening and configured to guide the outdoor fresh air unheated by the heat source 2 to the indoor environment through the indoor air supply opening. The control assembly 901 is configured to: acquire current outdoor humidity, current indoor humidity, indoor limit humidity, and a current outdoor temperature; calculate a difference between the current indoor humidity and the indoor limit humidity, in response to determining, based on the current outdoor humidity, the indoor limit humidity, and the current outdoor temperature, that an operation mode of the fresh air device is an isoenthalpy humidity controlling mode; and control a rotational speed of the adsorption rotary wheel, an opening degree of a bypass air valve on the bypass air duct, and power of the heat source based on the difference between the current indoor humidity and the indoor limit humidity, to enable the difference between the current indoor humidity and the indoor limit humidity to be within a predetermined humidity range.

In an embodiment of the present disclosure, the control assembly 901 is exemplarily configured to: acquire target indoor humidity and a target indoor temperature, and calculate the indoor limit humidity based on the target indoor humidity and the target indoor temperature.

In an embodiment of the present disclosure, the control assembly 901 is exemplarily configured to: determine that the operation mode of the fresh air device is the isoenthalpy humidity controlling mode, when the current outdoor humidity is smaller than the indoor limit humidity and the current outdoor temperature is greater than a humidification function lower limit temperature and smaller than the current indoor temperature; or determine that the operation mode of the fresh air device is the isoenthalpy humidity controlling mode, when the current outdoor humidity is smaller than the indoor limit humidity and the current outdoor temperature is greater than the humidification function lower limit temperature and smaller than an indoor limit temperature.

In an embodiment of the present disclosure, the control assembly 901 is exemplarily configured to: control the rotational speed of the adsorption rotary wheel to be smaller than a predetermined rotational speed, in response to determining that the operation mode of the fresh air device is the isoenthalpy humidity controlling mode.

In an embodiment of the present disclosure, the control assembly 901 is further configured to: increase the rotational speed of the adsorption rotary wheel, the opening degree of the bypass air valve, and the power of the heat source, when the difference between the current indoor humidity and the indoor limit humidity is out of the predetermined humidity range; and decrease the rotational speed of the adsorption rotary wheel, the opening degree of the bypass air valve, and the power of the heat source, when the difference between the current indoor humidity and the indoor limit humidity is below the predetermined humidity range.

In an embodiment of the present disclosure, the control assembly 901 is exemplarily configured to: repeatedly control the rotational speed of the adsorption rotary wheel, the opening degree of the bypass air valve, and the power of the heat source in a predetermined duration, when the difference between the current indoor humidity and the indoor limit humidity is out of the predetermined humidity range.

In an embodiment of the present disclosure, the predetermined duration ranges from 1 min to 5 min.

In an embodiment of the present disclosure, the control assembly 901 is exemplarily configured to: acquire a carbon dioxide content of the indoor return air; and control the air supply side fan and/or the air exhaust side fan based on the carbon dioxide content of the indoor return air, to enable the carbon dioxide content of the indoor return air to be within a predetermined carbon dioxide range.

In an embodiment of the present disclosure, the control assembly 901 is further configured to: increase a rotational speed of the air supply side fan and/or a rotational speed of the air exhaust side fan, when the carbon dioxide content of the indoor return air is out of the predetermined carbon dioxide range; and decrease the rotational speed of the air supply side fan and/or the rotational speed of the air exhaust side fan, when the carbon dioxide content of the indoor return air is below the predetermined carbon dioxide range.

In conclusion, in the fresh air device according to the embodiments of the present disclosure, the heat source, the rotational speed of the adsorption rotary wheel, and the opening degree of the bypass air valve can be controlled based on the indoor and outdoor environmental conditions to realize the multi-dimensional control of the indoor ambient humidity, which can ensure that the fresh air device can operate in the energy-efficient manner all year round and improve the user comfort.

It should be noted that, for details not disclosed in the fresh air device of the embodiments of the present disclosure, reference can be made to details disclosed in the control method for a fresh air device of the embodiments of the present disclosure. Details thereof will not be repeated here.

It should be noted that other components and functions of the fresh air device of the embodiments of the present disclosure are known to those skilled in the art. Details thereof will be omitted here for simplicity.

It should be noted that the logics and/or steps represented in the flowchart or described otherwise herein can be, for example, considered as a list of ordered executable instructions for implementing logic functions, and can be embodied in any computer-readable medium that is to be used by or used with an instruction execution system, apparatus, or device (such as a computer-based system, a system comprising a processing module, or any other system that can retrieve and execute instructions from an instruction execution system, apparatus, or device). For the present disclosure, a "computer-readable medium" can be any apparatus that can contain, store, communicate, propagate, or transmit a program to be used by or used with an instruction execution system, apparatus, or device. More specific examples (a non-exhaustive list) of computer-readable mediums comprise: an electrical connector (electronic device) with one or more wirings, a portable computer disk case (magnetic devices), a Random Access Memory (RAM), a Read Only Memory (ROM), an Erasable Programmable Read Only Memory (EPROM or flash memory), a fiber optic device, and a portable Compact Disk Read Only memory (CDROM). In addition, the computer-readable medium may even be a piece of paper or other suitable medium on which the program can be printed, as the program can be obtained electronically, e.g., by optically scanning the paper or the other medium, and then editing, interpreting, or otherwise processing the scanning result when necessary, and then stored in a computer memory.

It should be understood that each part of the present disclosure can be implemented in hardware, software, firmware, or any combination thereof. In the above embodiments, a number of steps or methods can be implemented using software or firmware stored in a memory and executed by a suitable instruction execution system. For example, when implemented in hardware, as in another embodiment, it can be implemented by any one or combination of the following technologies known in the art: a discrete logic circuit having logic gate circuits for implementing logic functions on data signals, an application-specific integrated circuit with suitable combined logic gates, a Programmable Gate Array (PGA), a Field Programmable Gate Array (FPGA), etc.

In descriptions of the present disclosure, descriptions with reference to the terms "an embodiment", "some embodiments", "examples", "specific examples", or "some examples" etc., mean that specific features, structure, materials, or characteristics described in conjunction with the embodiment or example are comprised in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

In descriptions of the present disclosure, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings in discussion, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of the indicated technical features. Therefore, the features associated with "first" and "second" may explicitly or implicitly comprise at least one of the features. In the description of the present disclosure, "plurality" means at least two, unless otherwise exemplarily defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Although embodiments of the present disclosure have been shown and described above, it should be understood that the above embodiments are merely exemplary, and cannot be construed as limitations of the present disclosure. For those skilled in the art, changes, alternatives, and modifications can be made to the above embodiments without departing from the scope of the present disclosure.

## Claims

1. A control method for a fresh air device, the fresh air device comprising:
an air supply side fan disposed at an indoor air supply opening and supplying an outdoor fresh air to an indoor environment;
an air exhaust side fan (4) disposed at an outdoor air exhaust opening and exhausting an indoor return air to an outdoor environment;
an adsorption rotary wheel (1) recovering a moisture from the indoor return air and release the moisture to the indoor environment along with the outdoor fresh air;
a heat source (2) disposed at an outdoor fresh air opening and heating the outdoor fresh air; and
a bypass air duct disposed between the outdoor fresh air opening and the indoor air supply opening and guiding an outdoor fresh air unheated by the heat source (2) to the indoor environment through the indoor air supply opening, the control method comprising:
(S10) acquiring a current outdoor humidity, a current indoor humidity, an indoor limit humidity, and a current outdoor temperature;
(S20) calculating a difference between the current indoor humidity and the indoor limit humidity in response to determining, based on the current outdoor humidity, the indoor limit humidity, and the current outdoor temperature, that an operation mode of the fresh air device is an isoenthalpy humidity controlling mode; and
(S30, S602) controlling a rotational speed of the adsorption rotary wheel (1), an opening degree of a bypass air valve (5) on the bypass air duct, and power of the heat source (2) based on the difference between the current indoor humidity and the indoor limit humidity, to enable the difference between the current indoor humidity and the indoor limit humidity to be within a predetermined humidity range.

2. The control method according to claim 1, wherein said acquiring the indoor limit humidity comprises:
acquiring a target indoor humidity and a target indoor temperature; and
obtaining the indoor limit humidity by calculating based on the target indoor humidity and the target indoor temperature.

3. The control method according to claim 1, wherein said determining, based on the current outdoor humidity, the indoor limit humidity, and the current outdoor temperature, that the operation mode of the fresh air device is the isoenthalpy humidity controlling mode comprises:
determining that the operation mode of the fresh air device is the isoenthalpy humidity controlling mode when the current outdoor humidity is smaller than the indoor limit humidity and when the current outdoor temperature is greater than a humidification function lower limit temperature and smaller than the current indoor temperature; or
determining that the operation mode of the fresh air device is the isoenthalpy humidity controlling mode when the current outdoor humidity is smaller than the indoor limit humidity and when the current outdoor temperature is greater than the humidification function lower limit temperature and smaller than an indoor limit temperature.

4. The control method according to claim 1, the control method further comprising:
(S601) controlling the rotational speed of the adsorption rotary wheel (1) to be smaller than a predetermined rotational speed in response to determining that the operation mode of the fresh air device is the isoenthalpy humidity controlling mode.

5. The control method according to claim 4, wherein said (S30, S602) controlling the rotational speed of the adsorption rotary wheel (1), the opening degree of the bypass air valve (5) on the bypass air duct, and the power of the heat source (2) based on the difference between the current indoor humidity and the indoor limit humidity comprises:
increasing the rotational speed of the adsorption rotary wheel (1), the opening degree of the bypass air valve (5), and the power of the heat source (2) in response to the difference between the current indoor humidity and the indoor limit humidity is out of the predetermined humidity range; and
decreasing the rotational speed of the adsorption rotary wheel (1), the opening degree of the bypass air valve (5), and the power of the heat source (2) in response to the difference between the current indoor humidity and the indoor limit humidity is below the predetermined humidity range.

6. The control method according to claim 1, further comprising:
repeatedly controlling the rotational speed of the adsorption rotary wheel (1), the opening degree of the bypass air valve (5), and the power of the heat source (2) in response to the difference between the current indoor humidity and the indoor limit humidity is out of the predetermined humidity range in a predetermined duration.

7. The control method according to claim 6, wherein the predetermined duration ranges from 1 min to 5 min.

8. The control method according to any one of claims 1 to 7, further comprising:
(S701) acquiring a carbon dioxide content of the indoor return air; and
(S702) controlling the air supply side fan and/or the air exhaust side fan (4) based on the carbon dioxide content of the indoor return air, to enable the carbon dioxide content of the indoor return air to be within a predetermined carbon dioxide range.

9. The control method according to claim 8, wherein said (S702) controlling the air supply side fan and/or the air exhaust side fan (4) based on the carbon dioxide content of the indoor return air comprises:
increasing a rotational speed of the air supply side fan and/or a rotational speed of the air exhaust side fan (4) when the carbon dioxide content of the indoor return air is out of the predetermined carbon dioxide range; and
decreasing the rotational speed of the air supply side fan and/or the rotational speed of the air exhaust side fan (4) when the carbon dioxide content of the indoor return air is below the predetermined carbon dioxide range.

10. A computer-readable storage medium, having a program for controlling a fresh air device stored thereon,
wherein the program for controlling the fresh air device, when executed by a processor (802), implements a control method according to any one of claims 1 to 9.

11. A fresh air device, comprising:
a memory (801);
a processor (802); and
a program for controlling a fresh air device stored in the memory (801) and executable by the processor (802),
wherein the processor (802), when executing the program for controlling the fresh air device, implements a control method according to any one of claims 1 to 9.

12. A fresh air device, comprising:
an air supply side fan disposed at an indoor air supply opening and supplying an outdoor fresh air to an indoor environment;
an air exhaust side fan (4) disposed at an outdoor air exhaust opening and exhausting an indoor return air to an outdoor environment;
an adsorption rotary wheel (1) recovering a moisture from the indoor return air and release the moisture to the indoor environment along with the outdoor fresh air;
a heat source (2) disposed at an outdoor fresh air opening and heating the outdoor fresh air;
a bypass air duct disposed between the outdoor fresh air opening and the indoor air supply opening and guiding an outdoor fresh air unheated by the heat source (2) to the indoor environment through the indoor air supply opening; and
a control assembly:
acquiring a current outdoor humidity, a current indoor humidity, an indoor limit humidity, and a current outdoor temperature;
calculating a difference between the current indoor humidity and the indoor limit humidity in response to determining, based on the current outdoor humidity, the indoor limit humidity, and the current outdoor temperature, that an operation mode of the fresh air device is an isoenthalpy humidity controlling mode; and
controlling a rotational speed of the adsorption rotary wheel (1), an opening degree of a bypass air valve (5) on the bypass air duct, and power of the heat source (2) based on the difference between the current indoor humidity and the indoor limit humidity, to enable the difference between the current indoor humidity and the indoor limit humidity to be within a predetermined humidity range.
